# EUROPEAN PATENT SPECIFICATION

(11) **EP 2 198 388 B1**
(45) Date of publication and mention of the grant of the patent: **03.10.2012**
(21) Application number: 08786736.2
(22) Date of filing: 01.08.2008
(51) Int. Cl.: G06K 7/10, G06K 7/00, H01Q 1/22, H01Q 3/24

(54) **A RADIO FREQUENCY IDENTIFICATION READER/WRITER AND A METHOD FOR IMPLEMENTING ANTENNA SWITCHING**
FUNKFREQUENZ-IDENTIFIZIERUNGSLESEGERÄT BZW. SCHREIBGERÄT UND VERFAHREN ZUR UMSETZUNG DER ANTENNENUMSCHALTUNG
DISPOSITIF DE LECTURE/ÉCRITURE D'IDENTIFICATION RADIOFRÉQUENCE ET PROCÉDÉ POUR METTRE EN UVRE UNE COMMUTATION D'ANTENNE

(30) Priority: 09.10.2007 CN 200710162984
(43) Date of publication of application: 23.06.2010
(73) Proprietor: Siemens Aktiengesellschaft, 80333 München (DE)
(72) Inventor: LAMPE, Mattias, Beijing 100102 (CN); YU, Dan, Beijing 100085 (CN); YUAN, Yong, Beijing 102208 (CN); ZHANG, Liang, Beijing 100102 (CN); HORST, Dieter, 90556 Cadolzburg (DE); LI, Hui, Beijing 100102 (CN)
(86) International application number: PCT/EP2008/060116
(87) International publication number: WO 2009/047028

(56) References cited:
- US-A1- 2005 054 293
- US-A1- 2007 194 929
- US-B1- 7 265 675

## Description

### Technical Field

The present invention relates to radio frequency identification (RFID) technology, in particular to an RFID reader/writer and a method for implementing antenna switching.

### Background Art

RFID is an automatic identification technology which comprises: bar code recognition, optical character recognition, smart card recognition, biometric identification and so on. In an RFID system, it mainly comprises an RFID tag and an RFID reader/writer.

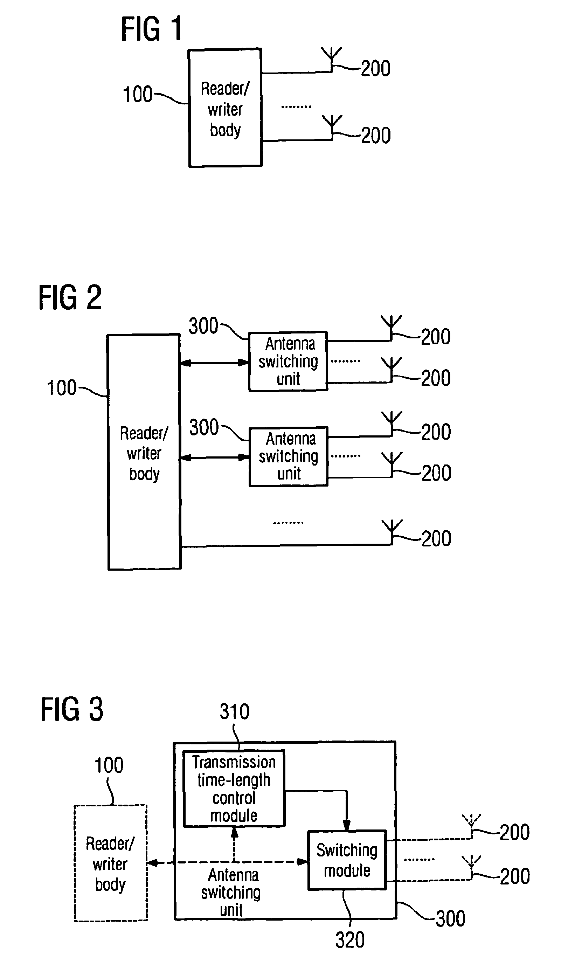

FIG 1 is a structural diagram of an RFID reader/writer according to the prior art. As shown in FIG 1, the RFID reader/writer comprises: a reader/writer body 100 and antennas 200, wherein, each of the antennas 200 corresponds to a port of the reader/writer body 100; the reader/writer body 100 controls the signal transmitting and receiving by antennas 200 at each port according to preset rules, and only one antenna 200 transmits a signal at any one time, while the other antennas 200 receive a signal. When it is in practical implementation, the reader/ writer body 100 distributes to each port a certain length of sustained time for the signal transmission according to the preset rules, and the antenna 200 connected to each port performs the signal transmission within the length of sustained time for the signal transmission. The RFID tags are used to identify the information of an object to be identified, and when an RFID tag carrier is moved into the coverage area in which the antenna 200 of the RFID reader/writer performs the signal transmission, the RFID tag is activated; the information in the RFID tag is received via the antenna 200 used for signal receiving by the RFID reader/writer, and the reader/writer body 100 in the RFID reader/writer identifies and processes the received information.

Currently, RFID technology has gained ever increasing attention, and is widely used in the fields of animal tracking, marine container tracking, tracking applications in the military and aviation fields, and so on, and furthermore, it is also used in supply chain management, and daily applications for consumers such as vehicle recognition at toll stations and refilling stations, and so on. When the tracking is carried out, the RFID reader/writer can determine the position of an RFID tag according to the coverage area of the antennas corresponding to the activated RFID tag.

In order to meet the increasing application demands, an RFID system should be able to ensure compliance with performance requirements in different reading ranges. However, in many cases, due to the transmitting power limitation of antennas 200 of the RFID reader/writer and the limitation in the number of antennas 200 supported in the RFID system in the prior art, the coverage area of the RFID reader/writer cannot satisfy the performance requirements of the RFID system.

In order to expand the coverage area by an RFID reader/- writer, there exists a solution in the prior art, which is: a power divider is set in each port of a reader/writer body 100 of an RFID reader/writer, which is used to divide the signal power of each port so as to support more antennas 200; however in this technology the power is distributed to each of the antennas 200 after having been divided by the power divider, so it reduces the transmitting power of each of the antennas 200, therefore it does not expand the coverage area; and when an RFID tag is activated, there is also no way to determine into the coverage area of which antenna corresponding to the port the RFID tag has entered, so it cannot meet the requirements for high precision tracking.

US 7 265 675 B1 - Carrender et al. "Multistatic antenna configuration for radio frequency identification (RFID) systems" discloses a reader module for RFID applications with a switching matrix for alternately connecting the HF circuits to a plurality of antennae.

US 20070194929 A1 - Wagner et al. "RFID antenna system having reduced orientation sensitivity" shows an antennae system for RFID which is less sensitive to orientation. A plurality of non-parallel antennae is switched so that at a time only one of these is active.

### Content of the Invention

The present invention on the one hand provides an RFID reader/writer, and on the other hand provides a method for implementing antenna switching of the RFID reader/writer, so as to expand the coverage area of the RFID reader/writer.

The RFID reader/writer provided in the present invention comprises:
A reader/writer body and antennas, and said reader/writer body is used for distributing to each of its own ports a length of sustained time for transmitting a signal; and the RFID reader/writer also comprises: at least one antenna switching unit;
one end of each of the antenna switching units is connected to one port of the reader/writer body, and the other end is connected to at least two antennas; said antenna switching unit is used to acquire the length of sustained time for the signal transmission distributed to said port by said reader/writer body, to perform a configuration of the time-length for the signal transmission and sequence thereof of said at least two antennas according to said length of sustained time for the signal transmission, to obtain a configuration result for the signal transmission, and to perform a switching control on the signal transmission of said at least two antennas according to said configuration result of the signal transmission.

Said antenna switching unit may further comprise:
A transmission time-length control module for acquiring the length of sustained time for the signal transmission distributed to said port by said reader/writer body; configuring, according to said length of sustained time for the signal transmission, the time-length for the signal transmission and sequence thereof of said at least two antennas in accordance with a preset configuration strategy; transmitting, according to said configuration result, a control signal to a switching module during the signal transmission;
a switching module for performing a switching operation on the signal transmission by said at least two antennas according to the control signal from said transmission time-length control module.

Said transmission time-length control module may further comprise :
A signal transmission time-length acquisition module for acquiring the length of sustained time for the signal transmission distributed to said port by said reader/writer body; an antenna transmission time-length configuration module for performing, according to the length of sustained time for the signal transmission acquired by said acquisition module, the configuration of the time-length for the signal transmission and sequence thereof of said at least two antennas in accordance with the preset configuration strategy; and
a control module for transmitting a control signal to the switching module during the signal transmission according to the signal transmission configuration result of said antenna transmission time-length configuration module.

Said signal transmission time-length acquisition module may further comprise:
A signal transmission start/stop time measurement module for measuring the power level of the signal passing through said port, for comparing the measurement result with a preset transmission power level threshold, and for determining the signal transmission's start time and stop time; and
a signal transmission time-length measurement module for recording the sustained time from the start time to the stop time of said signal transmission, so as to acquire the length of sustained time for the signal transmission distributed to said port by the reader/writer body.

Said antenna transmission time-length configuration module may further comprises :
A configuration strategy setting module for setting the signal transmission configuration strategy of said at least two antennas;
a transmission time-length distribution module for configuring the time-length for the signal transmission and sequence thereof of said at least two antennas in accordance with said signal transmission configuration strategy set in said configuration strategy setting module according to the length of sustained time for the signal transmission acquired by said signal transmission time-length acquisition module.

Said switching module may further comprise: a first transmitting/receiving switching module, a second transmitting/receiving switching module, an antenna switching module and a coupler, wherein,
said first transmitting/receiving switching module comprises: a first transmitting/receiving interface, a first transmitting interface and a first receiving interface; said first transmitting/receiving interface is connected to a port of said reader/writer body, and a transmitting channel is formed between said first transmitting/receiving interface and said first transmitting interface, and a receiving channel is formed between said first transmitting/receiving interface and said first receiving interface; and each first transmitting/receiving switching module is used for switching said transmitting channel and receiving channel according to the control signal from said transmission time-length control module;
the number of said second transmitting/receiving switching modules is the same as the number of antennas, and each second transmitting/receiving switching module comprises: a second transmitting/receiving interface, a second transmitting interface and a second receiving interface; said second transmitting/receiving interface is connected to the antennas, and a transmitting channel is formed between said second transmitting/receiving interface and said second transmitting interface, and a receiving channel is formed between said second transmitting/receiving interface and said second receiving interface; and each second transmitting/receiving switching module is used for switching said transmitting channel and receiving channel according to the control signal from said transmission time-length control module;
said antenna switching module comprises: a signal receiving interface and signal transmitting interfaces of the same number as the number of antennas; said signal receiving interface is connected to the first transmitting interface of said first transmitting/receiving switching module, and each of said transmitting interfaces is connected to the second receiving interface of one of the second transmitting/receiving switching modules; and said antenna switching module is used for switching the channels between said signal receiving interface and each of the transmitting interfaces according to the control signal from said transmission time-length control module; and
said coupler comprises: a signal transmitting interface and signal receiving interface of the same number as the number of antennas; said signal transmitting interface is connected to the first receiving interface of said first transmitting/receiving switching module, and each of said receiving interfaces is connected to the second transmitting interface of one of the second transmitting/receiving switching modules; and said coupler is used for coupling the signal from each second transmitting/receiving switching module, so as to output the signal obtained from one channel to the first transmitting/receiving switching module.

In the above RFID reader/writer, said reader/writer body may further determine the antenna corresponding to an activated RFID tag according to said configuration result for the signal transmission, and determines the position of said RFID tag according to the coverage area of said antenna.

Said reader/writer body may further comprise :
An antenna transmission time-length determining module for determining the time-length for the signal transmission and sequence thereof of said at least two antennas corresponding to each port in accordance with the preset configuration strategy according to the length of sustained time for the signal transmission distributed to each port by the reader/writer body, so as to acquire the configuration result for signal transmission of said at least two antennas; and
an RFID tag position determining module for determining the antenna corresponding to the activated RFID tag according to said configuration result for signal transmission, and for determining the position of said RFID tag according to the coverage area of said antenna.

An implementation method for antenna switching of the RFID reader/writer provided by the present invention comprises:
At least one antenna switching unit disposed between a reader/writer body and the antennas, one end of each of the antenna switching units being connected to one port of the reader/writer body, and the other end being connected to at least two antennas; and the method comprises:
   Acquiring with each of the antenna switching units the length of sustained time for the signal transmission distributed to the port connected to said antenna switching unit by the reader/writer body;
   performing a configuration of the time-length for the signal transmission and sequence thereof of each of the antennas connected to said antenna switching unit according to said length of sustained time for the signal transmission, so as to acquire the configuration result for the signal transmission; and
   performing a switching control on the signal transmission by each of the antennas connected to said antenna switching unit according to said configuration result for the signal transmission.

Said step for acquiring with the antenna switching unit the length of sustained time for the signal transmission distributed to the port connected to said antenna switching unit by the reader/writer body may further comprise :
Measuring by said antenna switching unit the signal's power level passing through said port, comparing the obtained measurement result with a preset transmission power level threshold so as to determine the start time and the stop time of the signal transmission; and
recording the sustained time from the start time to the stop time of said signal transmission, so as to acquire the length of sustained time for the signal transmission distributed to said port by the reader/writer body.

Said step for performing the configuration of the time-length for the signal transmission and sequence thereof of each of the antennas connected to said antenna switching unit according to said length of sustained time for the signal transmission so as to acquire the configuration result for the signal transmission may further comprise :
Setting a signal transmission configuration strategy for each of the antennas connected to said antenna switching unit; and
configuring the time-length for the signal transmission and sequence thereof of each said antenna in accordance with said signal transmission configuration strategy and according to said length of sustained time for the signal transmission, so as to acquire the signal transmission configuration result.

Said signal transmission configuration strategy may be the following: said length of sustained time for the signal transmission is equally distributed to each of the antennas connected to said antenna switching unit, or, the length of sustained time for the signal transmission is distributed to each of the antennas connected to said antenna switching unit in accordance with a preset weighting coefficient; and said step for performing the switching control on the signal transmission by said at least two antennas connected to said antenna switching unit according to the configuration result for the signal transmission is the following: according to the signal transmission configuration result, and during the signal transmission period, each of the antennas is controlled to perform the signal transmission in accordance with the time-length for the signal transmission and sequence thereof configured for said antenna.

Said signal transmission configuration strategy may be the following: said length of sustained time for the signal transmission is distributed in turn to one of the antennas connected to said antenna switching unit; and
said step for performing the switching control on the signal transmission by said at least two antennas connected to said antenna switching unit according to the configuration result for the signal transmission is the following: according to the signal transmission configuration result, and during each signal transmission period, one antenna is separately controlled to perform the signal transmission in accordance with a polling sequence according to said length of sustained time for the signal transmission.

Preferably, the method further comprises the following: the reader/writer body sends a resetting signal to the antenna switching unit periodically, the antenna switching unit receives said resetting signal and begins with the initial antenna in the polling sequence to execute, in each transmission period, said step of one antenna being separately controlled to perform the signal transmission in accordance with the polling sequence according to said length of sustained time for the signal transmission.

Preferably, the method further comprises the following: the reader/writer body determines the antenna corresponding to the activated RFID tag according to said signal transmission configuration result, and determines the position of said RFID tag according to the coverage area of said antenna.

In this case, before the reader/writer body determines the antenna corresponding to the activated RFID tag according to said signal transmission configuration result, said method may further comprise the following:
The reader/writer body determines the time-length for the signal transmission and sequence thereof of each of the antennas corresponding to the port in accordance with the preset configuration strategy according to the length of sustained time for the signal transmission distributed to each port by the reader/writer body, so as to acquire the signal transmission configuration result of each of the antennas.

It can be seen from the above technical solution that, in the present invention by setting at least one antenna switching unit between the reader/writer body and the antennas, with one end of each of the antenna switching units being connected to one port of the reader/writer body, while the other end thereof is connected to at least two antennas, it increases the number of antennas corresponding to a port, so under working conditions, each of the antenna switching units acquires the length of sustained time for the signal transmission distributed to the port connected to the antenna switching unit by the reader/writer body; the time-length for the signal transmission and sequence thereof of each of the antennas connected thereto are configured according to the length of sustained time for the signal transmission, and a switching control is performed on the signal transmission of each of the antennas connected to the antenna switching unit according to the acquired configuration result for the signal transmission; therefore there is no need to change the transmitting power distributed to each of the antennas, and the coverage area of the RFID reader/writer is expanded.

In addition, further, when performing the tracking, the reader/writer body determines the antenna corresponding to the activated RFID tag according the determined signal transmission configuration result, and determines the position of said RFID tag according to the coverage area of said antenna, so as to meet the requirements of tracking accuracy.

### Description of the drawings

The abovementioned and other features and advantages of the present invention will become more apparent to those skilled in the art by the detailed description of the exemplary embodiments of the present invention below with reference to the drawings, in which:
- FIG 1: is a structural diagram of an RFID reader/writer according to the prior art;
- FIG 2: is a structural diagram of an RFID reader/writer in an embodiment of the present invention;
- FIG 3: is a structural and connection relationship diagram of an antenna switching unit in the RFID reader/writer shown in FIG 2;
- FIG 4: is a structural and connection relationship diagram of a transmission time-length control module in the antenna switching unit shown in FIG 3;
- FIG 5: is a structural diagram of a signal transmission time-length acquisition module in the transmission time-length control module shown in FIG 4;
- FIG 6: is a structural diagram of an antenna transmission time-length configuration module in the transmission time-length control module shown in FIG 4;
- FIG 7: is an internal structural diagram of the reader/writer body in the RFID reader/writer shown in FIG 2;
- FIG 8: is a structural and connection relationship diagram of a switching module in the antenna switching unit shown in FIG 3;
- FIG 9: is a schematic flowchart of a method for implementing the antenna switching of the RFID reader/writer in an embodiment of the present invention;
- FIG 10: is a structural diagram of the RFID reader/writer in embodiment one of the present invention;
- FIG 11: is a schematic diagram of the transmission time and sequence of the antennas of the RFID reader/writer in embodiment one of the present invention; and
- FIG 12: is a schematic diagram of the transmission time and sequence of the antennas of the RFID reader/writer in embodiment two of the present invention.

### Practical Embodiments

In order to make the objects, technical solutions and advantages of the present invention more apparent, the present invention will be further described below by referring to the drawings and by way of embodiments.

FIG 2 is a structural diagram of an RFID reader/writer in an embodiment of the present invention. As shown in FIG 2, the RFID reader/writer comprises: a reader/writer body 100, antennas 200 and at least one antenna switching unit 300, in which, one end of each of the antenna switching units 300 is connected to a port of the reader/writer body 100, and the other end is connected to at least two antennas 200. By adding the antenna switching unit 300, and thus increasing the number of antennas 200 corresponding to a port, when in practical operation, there is no need to change the transmitting power of each of the antennas 200; only the switching of the signal transmission of each of the antennas 200 corresponding to the port is performed by the antenna switching unit 300, thus expanding the number of antennas 200 supported by the RFID reader/writer, and the number of antenna switching units 300 can be configured according to practical needs.

When in practical operation, the antenna switching unit 300 acquires the length of sustained time for the signal transmission distributed to the port connected to the antenna switching unit 300 by the reader/writer body 100, configures the time-length for the signal transmission (namely, the time-length for performing the signal transmission by each of the antennas 200) and sequence of each of the antennas 200 connected to the antenna switching unit 300 according to the length of sustained time for the signal transmission, so as to acquire the configuration result for the signal transmission (including the time-length for the signal transmission and sequence of each of the antennas 200), and performs a switching control on the signal transmission of each of the antennas 200 connected to the antenna switching unit 300 according to the configuration result for the signal transmission.

The reader/writer body 100 determines the antenna 200 corresponding to the activated RFID tag according to the configuration result for the signal transmission, and determines the position of the RFID tag according to the coverage area of the determined antenna 200.

When in practical application, there can be a plurality of forms for realizing the internal structure of each of the antenna switching units 300, and FIG 3 is a structural and connection relationship diagram of the antenna switching unit 300. As shown in FIG 3, the antenna switching unit 300 can comprise: a transmission time-length control module 310 and a switching module 320. In FIG 3, for the sake of clarity, the thick lines are used to represent the signal transmission lines, the thin lines to represent the test and control lines, the solid lines to represent the antenna switching unit 300 and the internal structure thereof, the dashed lines to represent the outside components connected to the antenna switching unit 300.

In this case, the transmission time-length control module 310 is used for acquiring the length of sustained time for the signal transmission distributed to the port connected to the antenna switching unit 300 by said reader/writer body 100; for configuring, according to said length of sustained time for the signal transmission, the time-length for the signal transmission and sequence of each of the antennas 200 connected to the antenna switching unit 300 in accordance with the preset configuration strategy; and for transmitting, according to said configuration result and during the signal transmission, a control signal to the switching module 320.

The switching module 320 is used for switching the signal transmission by each of the antennas 200 connected to the antenna switching unit 300 according to the control signal from the transmission time-length control module 310, namely to switch the transmitted signal received by the input port of the switching module 320 from one output port to another output port, and correspondingly, it realizes the switching of the signal transmission from one antenna 200 to another antenna 200.

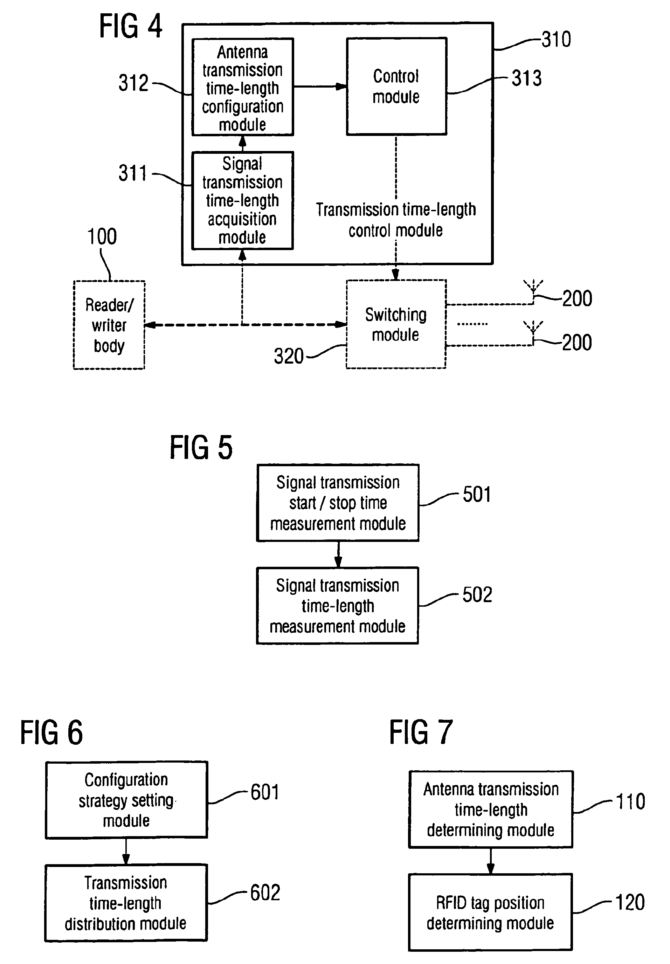

In this case, when it is in a practical implementation of the transmission time-length control module 310, it can be composed of different logic function modules, as shown in FIG 4, and FIG 4 shows a structural and connection relationship diagram of the transmission time-length control module 310. As shown in FIG 4, the transmission time-length control module 310 comprises three logic function modules: a signal transmission time-length acquisition module 311, an antenna transmission time-length configuration module 312, and a control module 313. In FIG 4, for the sake of clarity, the thick lines are used to represent the signal transmission lines, the thin lines to represent the test and control lines, the solid lines to represent the transmission time-length control module 310 and the internal structure thereof, and the dash lines to represent the components connected to but outside the transmission time-length control module 310.

In this case, the signal transmission time-length acquisition module 311 is used for acquiring the length of sustained time for the signal transmission distributed by said reader/writer body 100 to the port connected to the antenna switching unit 300.

The antenna transmission time-length configuration module 312 is used for performing the configuration of the time-length for the signal transmission and sequence of each of the antennas 200 connected to the antenna switching unit 300 in accordance with a preset configuration strategy and according to the length of sustained time for the signal transmission acquired by the signal transmission time-length acquisition module 311.

The control module 313 is used for transmitting a control signal to the switching module 320 during the signal transmission according to the signal transmission configuration result from the antenna transmission time-length configuration module 312.

When it is in a practical implementation, there are a plurality of realization methods for the antenna switching unit 300 to acquire the length of sustained time for the signal transmission distributed by the reader/writer body 100 to the port connected to the antenna switching unit 300, for example it can be as follows: the antenna switching unit 300 performs a measurement on the power level of the signal passing through the port connected thereto, compares the measurement result obtained with a preset transmission power level threshold, and determines the start time and stop time of the signal transmission, records the sustained time from the start time to the stop time for the signal transmission, so as to acquire the length of sustained time for the signal transmission distributed to the port by the reader/writer body 100.

Correspondingly, when it is in a practical implementation, inside the signal transmission time-length acquisition module 311, as shown in FIG 5, there may be two logic function modules: a signal transmission start/stop time measurement module 501 and a signal transmission time-length measurement module 502; and FIG 5 shows a structural diagram of a signal transmission time-length acquisition module 311 in the antenna switching unit 300.

In this case, the signal transmission start/stop time measurement module 501 is used for performing a measurement on the power level of the signal passing through the port connected to the antenna switching unit 300 to which it belongs, for comparing the measurement result obtained with a preset transmission power level threshold, and for determining the start time and stop time for the signal transmission. Wherein, the measurement of the signal power level can be by measuring the power level of the electric cable connecting the antenna switching unit 300 to the port.

The signal transmission time-length measurement module 502 is used for recording the sustained time from the start time to the stop time of said signal transmission, so as to acquire the length of sustained time for the signal transmission distributed to the port by the reader/writer body 100. When it is in a practical implementation, it can be recorded by an internal counter or timer.

When using this method, since at least one transmission cycle needs to be measured for the length of sustained time for the signal transmission, it is necessary to perform an initial transmission of the transmitted signal before acquiring the length of sustained time for the signal transmission and making a subsequent switching control, which can be done by using a current default antenna at this time, or it can also be done by setting other initial transmission strategies.

In addition, the method for the antenna switching unit 300 to acquire the length of sustained time for the signal transmission distributed by the reader/writer body 100 to the port connected to the antenna switching unit 300 can also be the following: the reader/writer body 100 informs the antenna switching unit 300 connected to the port of the length of sustained time for the signal transmission distributed by itself to the port.

In this case, an information transmission module can be set in the reader/writer body 100 for informing the antenna switching unit 300 connected to the port about the length of sustained time for the signal transmission distributed to the port by the reader/writer body 100.

Correspondingly, an information receiving module can be set within the antenna switching unit 300 for receiving the length of sustained time for the signal transmission distributed by the reader/writer body 100 to the port connected to the antenna switching unit 300.

In this case, the mode of transmitting and receiving can be via an I/O interface, or transmission can also be via an electric cable connecting the antenna switching unit 300 to the port.

When it is in a practical implementation, there are a plurality of methods for the antenna switching unit 300 to configure the time-length for the signal transmission and sequence of each of the antennas 200 connected to the antenna switching unit 300 in accordance with a preset configuration strategy and according to the length of sustained time for the signal transmission, for example it can be as follows: the configuration strategy for the signal transmission of each of the antennas 200 connected to the antenna switching unit 300 is set in advance in the antenna switching unit 300; and the antenna switching unit 300 configures the time-length for the signal transmission and sequence of each of the antennas 200 connected to the antenna switching unit 300 in accordance with the set configuration strategy for the signal transmission according to the length of sustained time for the signal transmission, so as to acquire the configuration result for the signal transmission.

Correspondingly, when it is in a practical implementation, inside the antenna transmission time-length configuration module 312 it can comprise two logic function modules as shown in FIG 6: a configuration strategy setting module 601 and a transmitting time-length distribution module 602. FIG 6 shows a structural diagram of the antenna transmission time-length configuration module 312 in the antenna switching unit 300.

In this case, the configuration strategy setting module 601 is used for setting the signal transmission configuration strategy of each of the antennas 200 connected to the antenna switching unit 300.

The transmission time-length distribution module 602 is used for configuring the time-length for the signal transmission and sequence of each of the antennas 200 connected to the antenna switching unit 300 in accordance with the signal transmission configuration strategy set in the configuration strategy setting module 601 and according to the length of sustained time for the signal transmission, so as to acquire the configuration result for the signal transmission.

In this case, the configuration strategy for the signal transmission can have a number of forms, for example, it can be in the form of averaged distribution, namely distributing the length of sustained time for the signal transmission equally to each of the antennas 200 connected to the antenna switching unit 300; or it can also be in the form of weighted distribution, namely distributing the length of sustained time for the signal transmission to each of the antennas 200 connected to the antenna switching unit 300 in accordance with a preset weighting coefficient; it can further be in the form of a polling distribution, namely distributing the length of sustained time for the signal transmission in turn to one of the antennas 200 connected to the antenna switching unit 300, and so on.

In this case, when one of the configuration strategies for the signal transmission is set, and the configuration of the time-length for the signal transmission and sequence of each of the antennas 200 connected to the antenna switching unit 300 is completed, then the configuration is readily made according to this particular configuration strategy for the signal transmission.

When a number of the configuration strategies for the signal transmission are set, and the configuration of the time-length for the signal transmission and sequence of each of the antennas 200 connected to the antenna switching unit 300 is completed, one of them can be selected according to the factors such as application situations and so on, and the configuration is made according to the selected configuration strategy for the signal transmission.

In this case, the process for the reader/writer body 100 to determine the configuration result for the signal transmission can be as follows: a configuration strategy for the signal transmission for each of the antennas connected to the antenna switching unit 300 is set in the reader/writer body 100 in advance, and this configuration strategy for the signal transmission is the same as the configuration strategy for the signal transmission set in the antenna switching unit 300. The reader/writer body 100 determines the time-length for the signal transmission and sequence of each of the antennas 200 connected to the antenna switching unit 300 in accordance with the set configuration strategy for the signal transmission (this configuration strategy for the signal transmission is the same as the configuration strategy for the signal transmission on which the antenna switching unit 300 is based when it configures the time-length for the signal transmission and sequence of each of the antennas 200) and according to the length of sustained time for the signal transmission distributed to the port connected to the antenna switching unit 300 by the body itself, so as to acquire the configuration result for the signal transmission.

Correspondingly, when it is to realize an operation that the reader/writer body 100 determines the antenna 200 corresponding to an activated RFID tag according to the configuration result for the signal transmission, and determines the position of the RFID tag according to the coverage area of the antenna 200, a corresponding logic function module can be set in the reader/writer body 100, and FIG 7 shows an internal structural diagram of the reader/writer body 100. As shown in FIG 7, the set logic function module comprises: an antenna transmission time-length determining module 110 and an RFID tag position determining module 120.

In this case, the antenna transmission time-length determining module 110 is used for determining the time-length for the signal transmission and sequence of each of the antennas 200 corresponding to the port in accordance with the preset configuration strategy according to the length of sustained time for the signal transmission distributed to each port by the reader/writer body 100, and for acquiring the configuration result for the signal transmission of each of the antennas 200.

The RFID tag position determining module 120 is used for determining the antenna 200 corresponding to the activated RFID tag according to the configuration result for the signal transmission, and for determining the position of the RFID tag according to the coverage area of the antenna 200.

In addition, the process for the reader/writer body 100 to determine the configuration result for the signal transmission can also be as follows: the antenna switching unit 300 sends to the reader/writer body 100 the configuration strategy for the signal transmission based on which it configures the time-length for the signal transmission and sequence of each of the antennas 200, and the reader/writer body 100, according to the configuration strategy for the signal transmission and the length of sustained time for the signal transmission distributed to the port, determines the time-length for the signal transmission and sequence of each of the antennas 200 corresponding to the port, so as to acquire the configuration result for the signal transmission of each of the antennas 200; or the antenna switching unit 300 sends to the reader/writer 100 the configuration result after it has configured the time-length for the signal transmission and sequence of each of the antennas 200.

Correspondingly, when it is in a practical implementation, a corresponding logic function module can be set in the reader/writer body 100, for example a configuration information processing module, which is used for receiving the configuration strategy for the signal transmission coming from the antenna switching unit 300, for determining the time-length for the signal transmission and sequence of each of the antennas 200 corresponding to the port according to the configuration strategy for the signal transmission and the length of sustained time for the signal transmission distributed to the port, and acquiring the configuration result for the signal transmission of each of the antennas 200; or the configuration information processing module is for receiving the configuration result for the signal transmission of each of the antennas 200 coming from the antenna switching unit 300.

In this case, the mode of transmitting and receiving can be via an I/O interface, and transmission can also be via an electric cable connecting the antenna switching unit 300 with the port.

The method for the antenna switching unit 300 to configure the time-length for the signal transmission and sequence of each of the antennas 200 connected to the antenna switching unit 300 in accordance with the preset configuration strategy and according to the length of sustained time for the signal transmission can also be as follows: the configuration strategy for the signal transmission of each of the antennas 200 connected to the antenna switching unit 300 is set in the reader/writer body 100 in advance; the set configuration strategy for the signal transmission is sent to the antenna switching unit 300; and the antenna switching unit 300 configures the time-length for the signal transmission and sequence of each of the antennas 200 connected to the antenna switching unit 300 in accordance with the received configuration strategy of the signal transmission and according to the length of sustained time for the signal transmission, so as to acquire the configuration result for the signal transmission.

Correspondingly, the antenna transmission time-length configuration module 312 can comprise a configuration strategy acquisition module and a transmission time-length distribution module. Wherein, the configuration strategy acquisition module is used for receiving the configuration strategy for the signal transmission coming from the reader/writer body 100; the transmission time-length distribution module is used for configuring the time-length for the signal transmission and sequence of each of the antennas 200 connected to the antenna switching unit 300 in accordance with the configuration strategy for the signal transmission acquired by the configuration strategy acquisition module and according to the length of sustained time for the signal transmission, so as to acquire the configuration result for the signal transmission.

In this case, the mode of transmitting and receiving can be via an I/O interface, and transmission can also be via an electric cable connecting the antenna switching unit 300 with the port.

In this case, as to the reader/writer body 100 itself, it can determine the time-length for the signal transmission and sequence of each of the antennas 200 connected to the antenna switching unit 300 in accordance with the configuration strategy for the signal transmission set in itself according to the length of sustained time for the signal transmission distributed by itself to the port connected to the antenna switching unit 300, so as to acquire the configuration result for the signal transmission.

Correspondingly, in the same way a logic function module as shown in FIG 7 can be set in the reader/writer body 100.

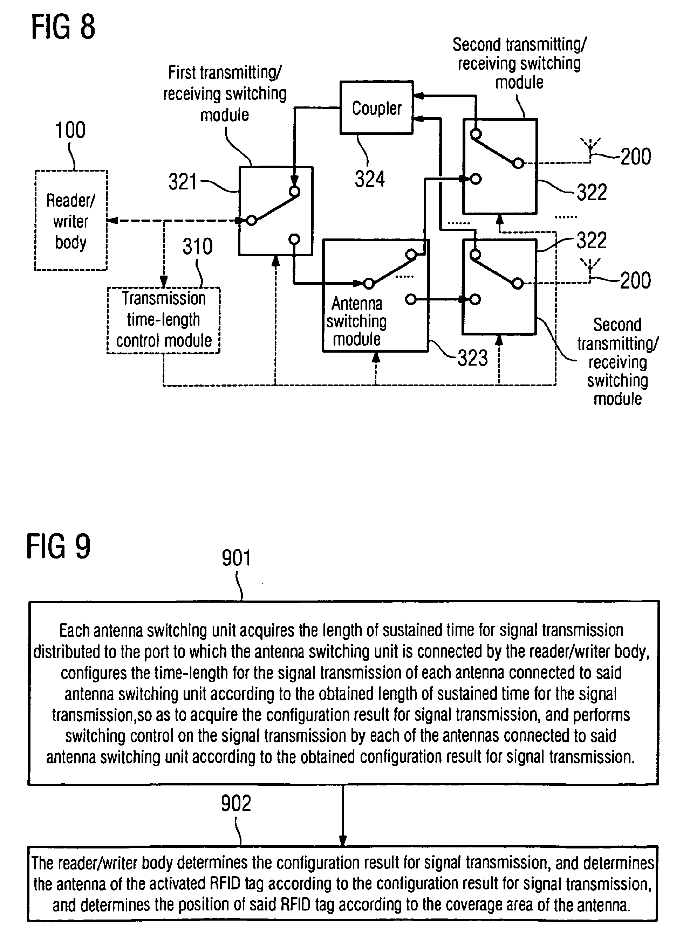

In addition, there are a number of ways for realizing the internal structure of the switching module 320 in the antenna switching unit 300, and FIG 8 is a structural and connection relationship diagram of the switching module 320. As shown in FIG 8, the switching module 320 can comprise: a first transmitting/receiving switching module 321 connected to one of the ports of the reader/writer body 100, a number of second transmitting/receiving switching modules 322 of the same number as the antennas 200, which are respectively connected to one of the antennas 200, an antenna switching module 323 which is positioned in a transmitting channel between the first transmitting/receiving switching module 321 and the second transmitting/receiving switching module 322, and a coupler 324 which is in the receiving channel between the first transmitting/receiving switching module 321 and the second transmitting/receiving switching module 322. In FIG 8, for the sake of clarity, the thick lines are used to represent the signal transmitting lines, the thin lines to represent the test and control lines, the solid lines to represent the internal structure of the switching module 320, the dash lines to represent the components connected to but outside the switching module 320.

In this case, the first transmitting/receiving switching module 321 comprises: a first transmitting/receiving interface, a first transmitting interface and a first receiving interface; wherein, the first transmitting/receiving interface is connected to one of the ports of the reader/writer body 100, a transmitting channel is formed between the first transmitting/receiving interface and the first transmitting interface, a receiving channel is formed between the first transmitting/receiving interface and the first receiving interface; and the first transmitting/receiving switching module 321 is used for switching the transmitting channel between the first transmitting/receiving interface and the first transmitting interface and the receiving channel between the first transmitting/receiving interface and the first receiving interface according to the control signal coming from said transmission time-length control module 310.

Each second transmitting/receiving switching module 322 comprises: a second transmitting/receiving interface, a second transmitting interface and a second receiving interface; said second transmitting/receiving interface is connected to an antenna, a transmitting channel is formed between the second transmitting/receiving interface and the second transmitting interface, a receiving channel is formed between the second transmitting/receiving interface and the second receiving interface; and the second transmitting/receiving switching module 322 is used for switching the transmitting channel between the second transmitting/receiving interface and the second transmitting interface and the receiving channel between the first transmitting/receiving interface and the second receiving interface according to the control signal coming from the transmission time-length control module 310.

The antenna switching module 323 comprises: a signal receiving interface and a number of signal transmitting interfaces of the same number as the antennas; said signal receiving interface is connected to the first transmitting interface of said first transmitting/receiving switching module 321, and each transmitting interface is connected to the second receiving interface of one of the second transmitting/receiving switching modules 322; the antenna switching module 323 is used for switching the channels between the signal receiving interface and each of the transmitting interfaces according to the control signal coming from said transmission time-length control module 310. Namely, the antenna switching module 323 switches the signal transmission of each of the antennas 200 connected to the antenna switching unit 300 according to the control signals coming from said transmission time-length control module 310.

The coupler 324 comprises: a signal transmitting interface and a number of signal receiving interfaces of the same number as the antennas; said signal transmitting interface is connected to the first receiving interface of the first transmitting/receiving switching module 321, and each of the receiving interfaces is connected to the second transmitting interface of one of the second transmitting/receiving switching modules 322; and the coupler 324 is used for coupling the signal from each second transmitting/receiving switching module 322, and outputting the obtained signal from one channel to the first transmitting/receiving switching module 321. Namely, the coupler 324 couples the signal coming from each of the antennas 200, and outputs the obtained signal from one channel to a port of the reader/writer body 100.

In addition, there are other forms for realizing the internal structure of the switching module 320, and it is usable as long as it can realize the switching at the time of signal transmission by each of the antennas 200, therefore no repeated description is needed here.

The detailed description given above is of the RFID reader/writer in the embodiments of the present invention, and an implementation method for antenna switching by the RFID reader/writer in the embodiments of the present invention is described in detail below.

FIG 9 is an exemplary flowchart of an implementation method for the antenna switching by the RFID reader/writer in the embodiment of the present invention. In this method, at least one antenna switching unit is arranged between the reader/writer body and the antennas, and one end of each of the antenna switching units is connected to one of the ports of the reader/writer body, and the other end is connected to at least two antennas. As shown in FIG 9, the flowchart comprises the following steps:
Step 901: each of the antenna switching units acquires the length of sustained time for the signal transmission distributed by the reader/writer body to the port connected to the antenna switching unit, configures the time-length for the signal transmission and sequence of each of the antennas connected to said antenna switching unit according to the obtained length of sustained time for the signal transmission, so as to acquire the signal transmission configuration result, and performs a switching control on the signal transmission of each of the antennas connected to said antenna switching unit according to the obtained configuration result for the signal transmission.

In this step, there are a number of methods for the antenna switching unit to acquire the length of sustained time for the signal transmission distributed by the reader/writer body to the port connected to the antenna switching unit, for example it can be as follows: the antenna switching unit measures the power level of the signal passing through the port connected to the antenna switching unit, compares the obtained measurement result with a preset transmission power level threshold, determines the start time and stop time for the signal transmission, and records the sustained time from the start time to the stop time for the signal transmission, so as to acquire the length of sustained time for the signal transmission distributed to the port by the reader/writer body.

When using this method, since at least one transmission cycle needs to be measured for the length of sustained time for the signal transmission, it is necessary to perform an initial transmission of the transmission signal before acquiring the length of sustained time for the signal transmission and performing the subsequent switching control, and at this moment it can be done by using the current default antenna, or it can also be done by setting other initial transmission strategies.

In addition, the method for the antenna switching unit to acquire the length of sustained time for the signal transmission distributed by the reader/writer body to the port connected to the antenna switching unit can also be as follows: The reader/writer body informs the antenna switching unit connected to the port of the length of sustained time for the signal transmission distributed to the port by itself. In this case, the mode of transmitting and receiving can be via the I/O interface, and transmission can also be via the electric cable connecting the antenna switching unit 300 with the port.

In this step, there are a number of methods for the antenna switching unit to configure the time-length for the signal transmission and sequence of each of the antennas connected to the antenna switching unit in accordance with preset configuration strategy and according to the length of sustained time for the signal transmission, and two of the implementation methods are given below.

### The first method:

The configuration strategy for the signal transmission of each of the antennas connected to the antenna switching unit is set in advance in the antenna switching unit; and the antenna switching unit configures the time-length for the signal transmission and sequence of each of the antennas connected to the antenna switching unit in accordance with the set configuration strategy for the signal transmission and according to the length of sustained time for the signal transmission, so as to acquire the configuration result for the signal transmission.

In this case, the configuration strategy for the signal transmission can be in a number of forms, for example it can be in the form of averaged distribution, namely distributing the length of sustained time for the signal transmission equally to each of the antennas connected to the antenna switching unit; it can also be in the form of weighted distribution, namely distributing the length of sustained time for the signal transmission to each of the antennas connected to the antenna switching unit in accordance with a preset weighting coefficient; it can further be in the form of polling distribution, namely distributing the length of sustained time for the signal transmission in turn to each of the antennas connected to the antenna switching unit, and so on.

When the configuration strategy for the signal transmission is in the form of averaged distribution or weighted distribution, during the signal transmission period, the antenna switching unit controls each of the antennas to perform the signal transmission in accordance with the time-length for the signal transmission and sequence of the configured antennas according to the configuration result for the signal transmission.

When the configuration strategy for the signal transmission is in the form of polling distribution, during each signal transmission period, the antenna switching unit separately controls one of the antennas, according to the polling sequence, to perform the signal transmission in accordance with said length of sustained time for the signal transmission according to the configuration result for the signal transmission. When it is in a practical implementation, it can be realized by counting the polling processes. For example, if one antenna switching unit has a total of *n* antennas, then it can be set that when the count value is 1, the antenna 1 carries out the signal transmission during this signal transmission period; when the count value is 2, the antenna 2 carries out the signal transmission during this signal transmission period, ......; when the count value is *n,* the antenna *n* carries out the signal transmission during this signal transmission period; and when the count value is *n*+1, the antenna 1 carries out the signal transmission during this signal transmission period, and so on. Further, in order to avoid counting errors caused by disassembling and assembling of the antenna switching unit or by counting faults, the reader/writer body can send a resetting signal to the antenna switching unit periodically, and when the antenna switching unit receives said resetting signal, it starts from the initial antenna (beginning with the count value 1) in the polling sequence, and during each signal transmission period, it controls one of the antennas separately to perform the signal transmission in accordance with the polling sequence and according to the length of sustained time for the signal transmission.

In this case, it can set just one configuration strategy for the signal transmission, then when performing the configuration of the time-length for the signal transmission and sequence of each of the antennas connected to the antenna switching unit, the configuration is readily made in accordance with this configuration strategy for signal transmission.

Alternatively, it can set a number of configuration strategies for the signal transmission, then when performing the configuration of the time-length for the signal transmission and sequence of each of the antennas connected to the antenna switching unit, it can be done by selecting one of them according to factors such as application situations and so on, and the configuration is carried out in accordance with the selected configuration strategy for the signal transmission.

### The second method:

The configuration strategy for the signal transmission by each of the antennas connected to the antenna switching unit is set in advance in the reader/writer body, and the set configuration strategy for the signal transmission is sent to the antenna switching unit; then the antenna switching unit configures the time-length for the signal transmission and sequence of each of the antennas connected to the antenna switching unit in accordance with the received configuration strategy for the signal transmission and according to the length of sustained time for the signal transmission, so as to acquire the configuration result for the signal transmission.

Step 902: the reader/writer body determines the configuration result for signal transmission, determines the antenna corresponding to an activated RFID tag according to the configuration result for the signal transmission, and determines the position of said RFID tag according to the coverage area of the antenna.

In this step, there are a number of methods to determine the configuration result for the signal transmission, corresponding to the first method in step 901 for the antenna switching unit to configure the time-length for the signal transmission and sequence of each of the antennas connected thereto; it can be as follows: the configuration strategy for the signal transmission of each of the antennas connected to the antenna switching unit is set in advance in the reader/writer body, and this configuration strategy for the signal transmission is the same as the configuration strategy for the signal transmission set in the antenna switching unit. The reader/writer body determines the time-length for the signal transmission and sequence of each of the antennas connected to the antenna switching unit in accordance with the set configuration strategy for the signal transmission (this configuration strategy for the signal transmission is the same as the configuration strategy for the signal transmission based on which the antenna switching unit configures the time-length for the signal transmission and sequence of each of the antennas) and according to the length of sustained time for the signal transmission distributed by itself to the port connected to the antenna switching unit, so as to acquire the configuration result for the signal transmission.

In addition, when the method for determining the configuration result for the signal transmission corresponds to the first method in step 901 for the antenna switching unit to configure the time-length for the signal transmission and sequence of each of the antennas connected thereto, it can also be as follows: the antenna switching unit sends to the reader/writer body the configuration strategy for the signal transmission based on which it configures the time-length for the signal transmission and sequence of each of the antennas, and the reader/writer body determines the time-length for the signal transmission and sequence of each of the antennas corresponding to the port according to the configuration strategy for the signal transmission and the length of sustained time for the signal transmission distributed to each port, so as to acquire the configuration result for the signal transmission of each of the antennas; or the antenna switching unit sends to the reader/writer body the signal transmission configuration result obtained after it has configured the time-length for the signal transmission and sequence of each of the antennas.

Corresponding to the second method in step 901 for the antenna switching unit to configure the time-length for the signal transmission and sequence of each of the antennas connected thereto, the reader/writer body determines the time-length for the signal transmission and sequence of each of the antennas connected to the antenna switching unit in accordance with the configuration strategy for the signal transmission set in itself and according to the length of sustained time for the signal transmission distributed by itself to the port connected to the antenna switching unit, so as to acquire the configuration result for the signal transmission.

The RFID reader/writer and the implementation method thereof in the above embodiments are described below by two specific examples.

### Example one:

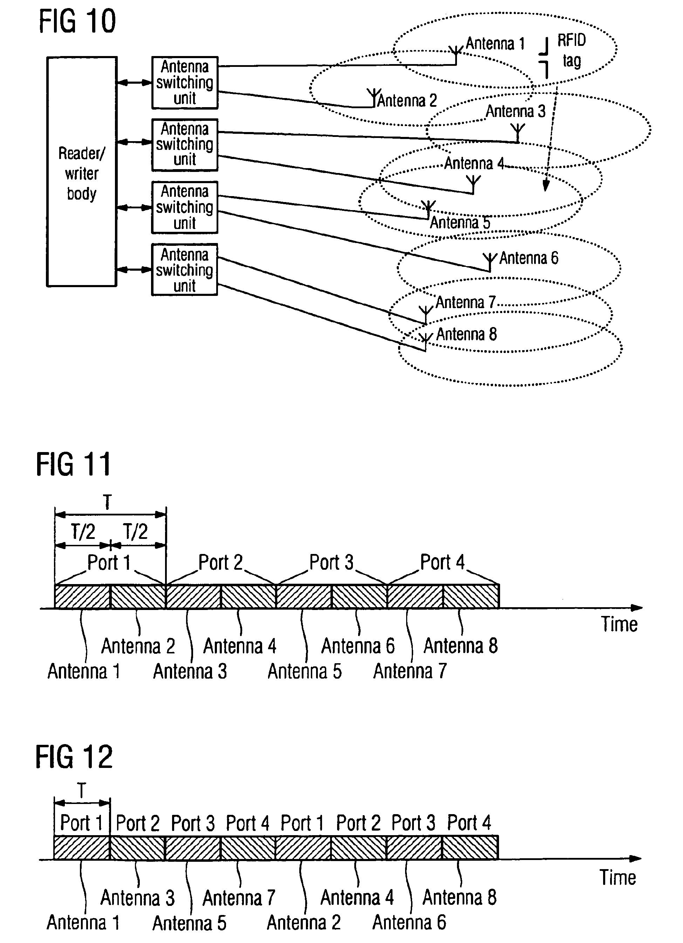

FIG 10 is a structural diagram of the RFID reader/writer in example one of the present invention. As shown in FIG 10, in this example, assume that the reader/writer body has four ports, from port 1 to port 4, and an antenna switching unit is fitted to each port, and each of the antenna switching units corresponds to two antennas; and assume that each of the antennas is separately labeled as antenna 1 to antenna 8 as shown in FIG 10, then port 1 corresponds to antenna 1 and antenna 2, port 2 corresponds to antenna 3 and antenna 4, port 3 corresponds to antenna 5 and antenna 6, and port 4 corresponds to antenna 7 and antenna 8.

Further, assume that a configuration strategy for the signal transmission which is for equal distribution is set in advance in the reader/writer body and each of the antenna switching units, and assume the length of sustained time for the signal transmission distributed to each port by the reader/writer body is T.

When in practical operation, the antenna switching unit first measures the power level of the signal passing through the port of the reader/writer body connected to the antenna switching unit, and compares the measured result with a preset transmitting power level threshold; when it reaches the preset transmitting power level threshold, the initial time of reaching the signal transmission is determined, and the length of sustained time of the power level of reaching the preset transmitting power level threshold is recorded by the timer, so as to acquire the length of sustained time for the signal transmission distributed to the port by the reader/writer body.

The antenna switching unit, according to the obtained length of sustained time for the signal transmission, distributes separately a time-length of T/2 for the signal transmission to the two antennas connected to the antenna switching unit in accordance with the configuration strategy of the averaged distribution; for example, as for the two antennas corresponding to port 1, a time-length for signal transmission T1 = T2 = T/2 is distributed separately to the antenna 1 and antenna 2.

During the signal transmission, if the reader/writer body selects port 1 to port 4 in turn for the signal transmission, and the antenna switching unit corresponding to each port distributes to the two antennas a time-length of T/2 for the signal transmission in turn, then the transmission time and sequence of each of the antennas is as shown in FIG 11.

Correspondingly, the reader/writer body determines the time-length and sequence of each of the antennas in accordance with the distribution strategy of the averaged distribution configured in advance and the length of sustained time for the signal transmission distributed to each port by itself, and acquires the transmitting time and sequence pattern for each of the antennas as shown in FIG 11; and the antenna of a currently activated RFID tag can be determined according to FIG 11, and the specific position of the RFID tag can then be determined according to the coverage area of the antenna.

### Example two:

In example two of the present invention, the structural diagram of the RFID reader/writer shown in FIG 10 is still taken by way of example. In this example, assume a configuration strategy for the signal transmission by polling distribution is set in advance in the reader/writer body and each of the antenna switching units, and assume the length of sustained time for the signal transmission distributed to each port by the reader/writer body is T.

When in practical operation, the antenna switching unit first measures the power level of the signal passing through the port of the reader/writer body connected to the antenna switching unit, and compares the obtained measurement result with a preset transmitting power level threshold; when it reaches the preset transmitting power level threshold, the initial time of reaching signal transmission is determined, and the length of sustained time of the power level of reaching the preset transmitting power level threshold is recorded by the timer, so as to acquire the length of sustained time for the signal transmission distributed to the port by the reader/writer body.

The antenna switching unit, according to the obtained length of sustained time for the signal transmission, equally distributes a time-length of T for the signal transmission to each of the antennas connected to the antenna switching unit in accordance with the configuration strategy of polling distribution; for example, for the two antennas corresponding to port 1, a time-length of T for signal transmission is distributed separately to antenna 1 and antenna 2; if it is for the current transmitting period of port 1, antenna 1 carries out the signal transmission, then antenna 2 carries out the signal transmission for the next transmission period of port 1, and so on.

During the signal transmission, if the reader/writer body selects port 1 to port 4 for carrying out the signal transmission in turn, and the antenna switching unit corresponding to each port selects an antenna in turn and distributes a time-length of T for the signal transmission, then the transmitting time and sequence of each of the antennas is as shown in FIG 12.

Correspondingly, the reader/writer body determines the time-length and sequence of each of the antennas in accordance with the distribution strategy of polling distribution configured in advance and the length of sustained time for the signal transmission distributed to each port by itself, and acquires the transmitting time and sequence pattern for each of the antennas as shown in FIG 12; and the antenna of a currently activated RFID tag can be determined according to FIG 12, and the specific position of the RFID tag then can be determined according to the coverage area of the antenna.

In this example, when it is in a practical implementation, it can be realized by counting the polling process, for example, for the antenna switching unit of port 1, it can be that when the count value is set as 1, antenna 1 is used to carry out the signal transmission during this signal transmission period; when the count value is 2, antenna 2 is used to carry out the signal transmission during this signal transmission period; when the count value is 3, antenna 1 is used to carry out the signal transmission during this signal transmission period; when the count value is 4, antenna 2 is used to carry out the signal transmission during this signal transmission period, and so on. Further, in this example, in order to avoid the counting errors caused by disassembling and assembling of the antenna switching unit or by a counting fault, the reader/writer body can send a resetting signal to the antenna switching unit periodically, and when the antenna switching unit receives the resetting signal, it starts with the initial antenna in the polling sequence, and during each signal transmission period, it separately controls an antenna to perform the signal transmission in accordance with the polling sequence according to the length of sustained time for the signal transmission. For example, for port 1, counting starts with 1, and antenna 1 is used to carry out the signal transmission during this signal transmission period.

In each of the abovementioned embodiments, when information reciprocal is needed between the antenna switching unit and the reader/writer body, a corresponding data line interface can be set up between the two; otherwise, it is enough to connect them merely by the electric cable for connecting the antennas.

The technical solution provided by the present invention can support relatively more antennas without reducing the transmitting power of each of the antennas; at the same time, there is no need to change the internal circuits in the reader/writer body in the preferred embodiments of the present invention, the length of sustained time for the signal transmission distributed to each port by the reader/writer body is measured automatically by the antenna switching unit, and each of the antennas connected thereto is controlled to carry out the signal transmission according to the measured length of sustained time for the signal transmission. In addition, since the reader/writer body and the antenna switching unit can simultaneously monitor the transmission status of each of the antennas during the signal transmission period, the reader/writer body can therefore determine the antenna of a currently activated RFID tag precisely, and determine the position of the RFID tag according to the coverage area of the antenna, so as to realize high precision tracking.

The above description covers only the preferred embodiments of the present invention, and it is not to be used to limit the scope of the present invention. principle of the present invention.

The scope of the invention is defined by the appended claims.

## Claims

1. A radio frequency identification, RFID, reader/writer, comprising:
A reader/writer body (100) and antennas, and said reader/writer body (100) being used for distributing to each of its own ports a length of sustained time for transmitting a signal;
at least one antenna switching unit (300),
one end of each of the antenna switching units (300) is connected to one port of the reader/writer body (100), and the other end is connected to at least two antennas; the RFID reader/writer being **characterized in that** : said antenna switching unit (300) is used to acquire the length of sustained time for the signal transmission distributed to said port by said reader/writer body (100), to perform a configuration of the time-length for the signal transmission and sequence thereof of said at least two antennas according to said length of sustained time for the signal transmission, to obtain a configuration result for the signal transmission, and to perform a switching control on the signal transmission of said at least two antennas according to said configuration result of the signal transmission.

2. The RFID reader/writer as claimed in claim 1, **characterized in that** said antenna switching unit (300) comprises:
A transmission time-length control module (310) for acquiring the length of sustained time for the signal transmission distributed to said port by said reader/writer body (100); configuring, according to said length of sustained time for the signal transmission, the time-length for the signal transmission and sequence thereof of said at least two antennas in accordance with a preset configuration strategy; transmitting, according to said configuration result, a control signal to a switching module (320) during the signal transmission;
a switching module (320) for performing a switching operation on the signal transmission by said at least two antennas according to the control signal from said transmission time-length control module (310).

3. The RFID reader/writer as claimed in claim 2, **characterized in that** said transmission time-length control module (310) comprises:
A signal transmission time-length acquisition module (311) for acquiring the length of sustained time for the signal transmission distributed to said port by said reader/writer body (100);
an antenna transmission time-length configuration module (312) for performing, according to the length of sustained time for the signal transmission acquired by said acquisition module (311), the configuration of the time-length for the signal transmission and sequence thereof of said at least two antennas in accordance with the preset configuration strategy; and
a control module (313) for transmitting a control signal to the switching module (320) during the signal transmission according to the signal transmission configuration result of said antenna transmission time-length configuration module (312).

4. The RFID reader/writer as claimed in claim 3, **characterized in that** said signal transmission time-length acquisition module (311) comprises:
A signal transmission start/stop time measurement module (501) for measuring the power level of the signal passing through said port, for comparing the measurement result with a preset transmission power level threshold, and for determining the signal transmission's start time and stop time; and
a signal transmission time-length measurement module (502) for recording the sustained time from the start time to the stop time of said signal transmission, so as to acquire the length of sustained time for the signal transmission distributed to said port by the reader/writer body (100).

5. The RFID reader/writer as claimed in claim 3, **characterized in that** said antenna transmission time-length configuration module (312) comprises:
A configuration strategy setting module (601) for setting the signal transmission configuration strategy of said at least two antennas;
a transmission time-length distribution module (602) for configuring the time-length for the signal transmission and sequence thereof of said at least two antennas in accordance with said signal transmission configuration strategy set in said configuration strategy setting module (601) according to the length of sustained time for the signal transmission acquired by said signal transmission time-length acquisition module (311).

6. The RFID reader/writer as claimed in claim 2, **characterized in that** said switching module (320) comprises:
A first transmitting/receiving switching module (321), a second transmitting/receiving switching module (322), an antenna switching module (323) and a coupler (324), wherein,
said first transmitting/receiving switching module (321) comprises: a first transmitting/receiving interface, a first transmitting interface and a first receiving interface; said first transmitting/receiving interface is connected to a port of said reader/writer body (100), and a transmitting channel is formed between said first transmitting/receiving interface and said first transmitting interface, and a receiving channel is formed between said first transmitting/receiving interface and said first receiving interface; and each first transmitting/receiving switching module (321) is used for switching said transmitting channel and receiving channel according to the control signal from said transmission time-length control module (310);
the number of said second transmitting/receiving switching modules (322) is the same as the number of antennas, and each second transmitting/receiving switching module (322) comprises: a second transmitting/receiving interface, a second transmitting interface and a second receiving interface; said second transmitting/receiving interface is connected to the antennas, and a transmitting channel is formed between said second transmitting/receiving interface and said second transmitting interface, and a receiving channel is formed between said second transmitting/receiving interface and said second receiving interface; and each second transmitting/receiving switching module (322) is used for switching said transmitting channel and receiving channel according to the control signal from said transmission time-length control module (310);
said antenna switching module (323) comprises: a signal receiving interface and signal transmitting interfaces of the same number as the number of antennas; said signal receiving interface is connected to the first transmitting interface of said first transmitting/receiving switching module (321), and each of said transmitting interfaces is connected to the second receiving interface of one of the second transmitting/receiving switching modules (322); and said antenna switching module (323) is used for switching the channels between said signal receiving interface and each of the transmitting interfaces according to the control signal from said transmission time-length control module (310); and
said coupler (324) comprises: a signal transmitting interface and signal receiving interface of the same number as the number of antennas; said signal transmitting interface is connected to the first receiving interface of said first transmitting/receiving switching module (321), and each of said receiving interfaces is connected to the second transmitting interface of one of the second transmitting/receiving switching modules (322); and said coupler (324) is used for coupling the signal from each second transmitting/receiving switching module (322), so as to output a signal obtained from one channel to the first transmitting/receiving switching module (321).

7. The RFID reader/writer as claimed in any one of claims 2 to 6, **characterized in that** said reader/writer body (100) further determines the antenna corresponding to an activated RFID tag according to said configuration result for the signal transmission, and determines the position of said RFID tag according to the coverage area of said antenna.

8. The RFID reader/writer as claimed in claim 7, **characterized in that** said reader/writer body (100) comprises:
An antenna transmission time-length determining module (110) for determining the time-length for the signal transmission and sequence thereof of said at least two antennas corresponding to each port in accordance with the preset configuration strategy according to the length of sustained time for the signal transmission distributed to each port by the reader/writer body (100), so as to acquire the configuration result for signal transmission of said at least two antennas; and
an RFID tag position determining module (120) for determining the antenna corresponding to the activated RFID tag according to said configuration result for signal transmission, and for determining the position of said RFID tag according to the coverage area of said antenna.

9. An implementation method for antenna switching of a radio frequency identification, RFID, reader/writer, whereby at least one antenna switching unit is disposed between a reader/writer body and the antennas, one end of each of the antenna switching units being connected to one port of the reader/writer body, and the other end being connected to at least two antennas;
the method being **characterized by** comprising the following steps:
Acquiring with each of the antenna switching units the length of sustained time for the signal transmission distributed to the port connected to said antenna switching unit by the reader/writer body;
performing a configuration of the time-length for the signal transmission and sequence thereof of each of the antennas connected to said antenna switching unit according to said length of sustained time for the signal transmission, so as to acquire the configuration result for the signal transmission; and
performing a switching control on the signal transmission by each of the antennas connected to said antenna switching unit according to said configuration result for the signal transmission.

10. The method as claimed in claim 9, **characterized in that** said step for acquiring with the antenna switching unit the length of sustained time for the signal transmission distributed to the port connected to said antenna switching unit by the reader/writer body comprises:
Measuring by said antenna switching unit the signal's power level passing through said port, comparing the obtained measurement result with a preset transmission power level threshold so as to determine the start time and the stop time of the signal transmission; and
recording the sustained time from the start time to the stop time of said signal transmission, so as to acquire the length of sustained time for the signal transmission distributed to said port by the reader/writer body.

11. The method as claimed in claim 9, **characterized in that** said step for performing the configuration of the time-length for the signal transmission and sequence thereof of each of the antennas connected to said antenna switching unit according to said length of sustained time for the signal transmission so as to acquire the configuration result for the signal transmission comprises:
Setting a signal transmission configuration strategy for each of the antennas connected to said antenna switching unit; and
configuring the time-length for the signal transmission and sequence thereof of each said antenna in accordance with said signal transmission configuration strategy and according to said length of sustained time for the signal transmission, so as to acquire the signal transmission configuration result.

12. The method as claimed in claim 11, **characterized in that** said signal transmission configuration strategy is the following: said length of sustained time for the signal transmission is equally distributed to each of the antennas connected to said antenna switching unit, or, the length of sustained time for the signal transmission is distributed to each of the antennas connected to said antenna switching unit in accordance with a preset weighting coefficient; and
said step for performing the switching control on the signal transmission by said at least two antennas connected to said antenna switching unit according to the configuration result for the signal transmission is the following: according to the signal transmission configuration result, and during the signal transmission period, each of the antennas is controlled to perform the signal transmission in accordance with the time-length for the signal transmission and sequence thereof configured for said antenna.

13. The method as claimed in claim 11, **characterized in that** said signal transmission configuration strategy is the following:
Said length of sustained time for the signal transmission is distributed in turn to one of the antennas connected to said antenna switching unit; and
said step for performing the switching control on the signal transmission by said at least two antennas connected to said antenna switching unit according to the configuration result for the signal transmission is the following: according to the signal transmission configuration result, and during each signal transmission period, one antenna is separately controlled to perform the signal transmission in accordance with a polling sequence according to said length of sustained time for the signal transmission.

14. The method as claimed in claim 13, **characterized in that** the method further comprises the following: the reader/writer body sends a resetting signal to the antenna switching unit periodically, the antenna switching unit receives said resetting signal and begins with the initial antenna in the polling sequence to execute, in each signal transmission period, said step of one antenna being separately controlled to perform the signal transmission in accordance with the polling sequence according to said length of sustained time for the signal transmission.

15. The method as claimed in any one of claims 9 to 14, **characterized in that** the method further comprises the following:
The reader/writer body determines the antenna corresponding to the activated RFID tag according to said signal transmission configuration result, and determines the position of said RFID tag according to the coverage area of said antenna.

16. The method as claimed in claim 15, **characterized in that** before said reader/writer body determines the antenna corresponding to the activated RFID tag according to said signal transmission configuration result, said method further comprises the following:
The reader/writer body determines the time-length for the signal transmission and sequence thereof of each of the antennas corresponding to the port in accordance with the preset configuration strategy according to the length of sustained time for the signal transmission distributed to each port by the reader/writer body, so as to acquire the signal transmission configuration result of each of the antennas.

## Patentansprüche

1. Lese-/Schreibgerät für Hochfrequenz-Identifizierung, RFID, umfassend:
einen Lese-/Schreibgerätkörper (100) und Antennen, und wobei der Lese-/Schreibgerätkörper (100) zum Verteilen einer Länge fortwährender Zeit zum Übertragen eines Signals an jeden seiner eigenen Anschlüsse verwendet wird;
mindestens eine Antennenumschalteinheit (300),
wobei ein Ende jeder der Antennenumschalteinheiten (300) mit einem Anschluss des Lese-/Schreibgerätkörpers (100) verbunden ist und das andere Ende mit mindestens zwei Antennen verbunden ist;
wobei das RFID-Lese-/Schreibgerät **dadurch gekennzeichnet ist, dass**:
die Antennenumschalteinheit (300) zum Erfassen der durch den Lese-/Schreibgerätkörper (100) an den Anschluss verteilten Länge fortwährender Zeit für die Signalübertragung verwendet wird, um eine Konfiguration der Zeitlänge für die Signalübertragung und ihrer Abfolge der mindestens zwei Antennen gemäß der Länge fortwährender Zeit für die Signalübertragung durchzuführen, um ein Konfigurationsergebnis für die Signalübertragung zu erhalten und um eine Umschaltsteuerung an der Signalübertragung der mindestens zwei Antennen gemäß dem Konfigurationsergebnis der Signalübertragung durchzuführen.

2. RFID-Lese-/Schreibgerät nach Anspruch 1, **dadurch gekennzeichnet, dass** die Antennenumschalteinheit (300) Folgendes umfasst:
ein Übertragungszeitlängen-Steuermodul (310) zum Erfassen der an den Anschluss durch den Lese-/Schreibgerätkörper (100) verteilten Länge fortwährender Zeit für die Signalübertragung; Konfigurieren, gemäß der Länge fortwährender Zeit für die Signalübertragung, der Zeitlänge für die Signalübertragung und ihrer Abfolge der mindestens zwei Antennen in Übereinstimmung mit einer voreingestellten Konfigurationsstrategie; Übertragen, gemäß dem Konfigurationsergebnis, eines Steuersignals an ein Umschaltmodul (320) während der Signalübertragung;
ein Umschaltmodul (320) zum Durchführen einer Umschaltoperation an der Signalübertragung durch mindestens zwei Antennen gemäß dem Steuersignal von dem Übertragungszeitlängen-Steuermodul (310).

3. RFID-Lese-/Schreibgerät nach Anspruch 2, **dadurch gekennzeichnet, dass** das Übertragungszeitlängen-Steuermodul (310) Folgendes umfasst:
ein Signalübertragungszeitlängen-Erfassungsmodul (311) zum Erfassen der an den Anschluss durch den Lese-/Schreibgerätkörper (100) verteilten Länge fortwährender Zeit für die Signalübertragung;
ein Antennen-Übertragungszeitlängen-Konfigurationsmodul (312) zum Durchführen, gemäß der durch das Erfassungsmodul (311) erfassten Länge fortwährender Zeit für die Signalübertragung, der Konfiguration der Zeitlänge für die Signalübertragung und ihrer Abfolge der mindestens zwei Antennen in Übereinstimmung mit der voreingestellten Konfigurationsstrategie; und
ein Steuermodul (313) zum Übertragen eines Steuersignals an das Umschaltmodul (320) während der Signalübertragung gemäß dem Signalübertragungs-Konfigurationsergebnis des Antennen-Übertragungszeitlängen-Konfigurationsmoduls (312).

4. RFID-Lese-/Schreibgerät nach Anspruch 3, **dadurch gekennzeichnet, dass** das Signalübertragungszeitlängen-Erfassungsmodul (311) Folgendes umfasst:
ein Signalübertragung-Start/Stopp-Zeitmessmodul (501) zum Messen des Leistungspegels des durch den Anschluss verlaufenden Signals, zum Vergleichen des Messergebnisses mit einem voreingestellten Übertragungs-Leistungspegel-Schwellenwert und zum Bestimmen der Startzeit und Stoppzeit der Signalübertragung; und
ein Signalübertragungszeitlängen-Messmodul (502) zum Aufzeichnen der fortwährenden Zeit von der Startzeit zu der Stoppzeit der Signalübertragung, um die an den Anschluss durch den Lese-/Schreibgerätkörper (100) verteilte Länge fortwährender Zeit für die Signalübertragung zu erfassen.

5. RFID-Lese-/Schreibgerät nach Anspruch 3, **dadurch gekennzeichnet, dass** das Antennen-Übertragungszeitlängen-Konfigurationsmodul (312) Folgendes umfasst:
ein Konfigurationsstrategie-Einstellmodul (601) zum Einstellen der Signalübertragungs-Konfigurationsstrategie der mindestens zwei Antennen;
ein Übertragungszeitlängen-Verteilungsmodul (602) zum Konfigurieren der Zeitlänge für die Signalübertragung und ihrer Abfolge der mindestens zwei Antennen in Übereinstimmung mit der Signalübertragungs-Konfigurationsstrategie, eingestellt in dem Konfigurationsstrategie-Einstellmodul (601) gemäß der durch das Signalübertragungszeitlängen-Erfassungsmodul (311) erfassten Länge fortwährender Zeit für die Signalübertragung.

6. RFID-Lese-/Schreibgerät nach Anspruch 2, **dadurch gekennzeichnet, dass** das Umschaltmodul (320) Folgendes umfasst:
ein erstes Übertragungs-/Empfangsumschaltmodul (321), ein zweites Übertragungs-/Empfangsumschaltmodul (322), ein Antennenumschaltmodul (323) und einen Koppler (324), wobei
das erste Übertragungs-/Empfangsumschaltmodul (321) Folgendes umfasst: eine erste Übertragungs-/Empfangsschnittstelle, eine erste Übertragungsschnittstelle und eine erste Empfangsschnittstelle; wobei die erste Übertragungs-/Empfangsschnittstelle mit einem Anschluss des Lese-/Schreibgerätkörpers (100) verbunden ist und ein Übertragungskanal zwischen der ersten Übertragungs-/Empfangsschnittstelle und der ersten Übertragungsschnittstelle gebildet wird und ein Empfangskanal zwischen der ersten Übertragungs-/Empfangsschnittstelle und der ersten Empfangsschnittstelle gebildet wird; und jedes erste Übertragungs-/Empfangsumschaltmodul (321) zum Umschalten des Übertragungskanals und Empfangskanals gemäß dem Steuersignal von dem Übertragungszeitlängen-Steuermodul (310) verwendet wird;
wobei die Zahl der zweiten Übertragungs-/Empfangsumschaltmodule (322) die gleiche ist wie die Zahl von Antennen und jedes zweite Übertragungs-/Empfangsumschaltmodul (322) Folgendes umfasst: eine zweite Übertragungs-/Empfangsschnittstelle, eine zweite Übertragungsschnittstelle und eine zweite Empfangsschnittstelle; wobei die zweite Übertragungs-/Empfangsschnittstelle mit den Antennen verbunden ist und ein Übertragungskanal zwischen der zweiten Übertragungs-/Empfangsschnittstelle und der zweiten Übertragungsschnittstelle gebildet wird und ein Empfangskanal zwischen der zweiten Übertragungs-/Empfangsschnittstelle und der zweiten Empfangsschnittstelle gebildet wird; und jedes zweite Übertragungs-/Empfangsumschaltmodul (322) zum Umschalten des Übertragungskanals und Empfangskanals gemäß dem Steuersignal von dem Übertragungszeitlängen-Steuermodul (310) verwendet wird;
wobei das Antennenumschaltmodul (323) Folgendes umfasst: eine Signalempfangsschnittstelle und Signalübertragungsschnittstellen der gleichen Zahl wie die Zahl von Antennen; wobei die Signalempfangsschnittstelle mit der ersten Übertragungsschnittstelle des ersten Übertragungs-/Empfangsumschaltmoduls (321) verbunden ist und jede der Übertragungsschnittstellen mit der zweiten Empfangsschnittstelle eines der zweiten Übertragungs-/Empfangsumschaltmodule (322) verbunden ist; und das Antennenumschaltmodul (323) zum Umschalten der Kanäle zwischen der Signalempfangsschnittstelle und jeder der Übertragungsschnittstellen gemäß dem Steuersignal von dem Übertragungszeitlängen-Steuermodul (310) verwendet wird; und
wobei der Koppler (324) Folgendes umfasst: eine Signalübertragungsschnittstelle und Signalempfangsschnittstellen der gleichen Zahl wie die Zahl von Antennen; wobei die Signalübertragungsschnittstelle mit der ersten Empfangsschnittstelle des ersten Übertragungs-/Empfangsumschaltmoduls (321) verbunden ist und jede der Empfangsschnittstellen mit der zweiten Übertragungsschnittstelle eines der zweiten Übertragungs-/Empfangsumschaltmodule (322) verbunden ist; und der Koppler (324) zum Koppeln des Signals von jedem zweiten Übertragungs-/Empfangsumschaltmodul (322) verwendet wird, um ein von einem Kanal erhaltenes Signal an das erste Übertragungs-/Empfangsumschaltmodul (321) auszugeben.

7. RFID-Lese-/Schreibgerät nach einem der Ansprüche 2 bis 6, **dadurch gekennzeichnet, dass** der Lese-/Schreibgerätkörper (100) ferner die mit einem aktivierten RFID-Etikett korrespondierende Antenne gemäß dem Konfigurationsergebnis für die Signalübertragung bestimmt und die Position des RFID-Etiketts gemäß dem Abdeckungsbereich der Antenne bestimmt.

8. RFID-Lese-/Schreibgerät nach Anspruch 7, **dadurch gekennzeichnet, dass** der Lese-/Schreibgerätkörper (100) Folgendes umfasst:
ein Antennen-Übertragungszeitlängen-Bestimmungsmodul (110) zum Bestimmen der Zeitlänge für die Signalübertragung und ihrer Abfolge der mit jedem Anschluss korrespondierenden mindestens zwei Antennen in Übereinstimmung mit der voreingestellten Konfigurationsstrategie gemäß der an jeden Anschluss durch den Lese-/Schreibgerätkörper (100) verteilten Länge fortwährender Zeit für die Signalübertragung, um das Konfigurationsergebnis für Signalübertragung der mindestens zwei Antennen zu erfassen; und
ein RFID-Etikettenposition-Bestimmungsmodul (120) zum Bestimmen der mit dem aktivierten RFID-Etikett korrespondierenden Antenne gemäß dem Konfigurationsergebnis für Signalübertragung und zum Bestimmen der Position des RFID-Etiketts gemäß dem Abdeckungsbereich der Antenne.

9. Implementierungsverfahren für Antennenumschaltung eines Lese-/Schreibgeräts für Hochfrequenz-Identifizierung, RFID, wobei mindestens eine Antennenumschalteinheit zwischen einem Lese-/Schreibgerätkörper und den Antennen angeordnet ist, wobei ein Ende jeder der Antennenumschalteinheiten mit einem Anschluss des Lese-/Schreibgerätkörpers verbunden ist und das andere Ende mit mindestens zwei Antennen verbunden ist;
wobei das Verfahren **dadurch gekennzeichnet ist, dass** es die folgenden Schritte umfasst:
Erfassen, mit jeder der Antennenumschalteinheiten, der durch den Lese-/Schreibgerätkörper an den mit der Antennenumschalteinheit verbundenen Anschluss verteilten Länge fortwährender Zeit für die Signalübertragung;
Durchführen einer Konfiguration der Zeitlänge für die Signalübertragung und ihrer Abfolge jeder der mit der Antennenumschalteinheit verbundenen Antennen gemäß der Länge fortwährender Zeit für die Signalübertragung, um das Konfigurationsergebnis für die Signalübertragung zu erfassen; und
Durchführen einer Umschaltsteuerung an der Signalübertragung durch jede der mit der Antennenumschalteinheit verbundenen Antennen gemäß dem Konfigurationsergebnis für die Signalübertragung.

10. Verfahren nach Anspruch 9, **dadurch gekennzeichnet, dass** der Schritt zum Erfassen, mit der Antennenumschalteinheit, der an den mit der Antennenumschalteinheit verbundenen Anschluss durch den Lese-/Schreibgerätkörper verteilten Länge fortwährender Zeit für die Signalübertragung Folgendes umfasst:
Messen, durch die Antennenumschalteinheit, des Leistungspegels des durch den Anschluss verlaufenden Signals, Vergleichen des erhaltenen Messergebnisses mit einem voreingestellten Übertragungs-Leistungspegel-Schwellenwert, um die Startzeit und die Stoppzeit der Signalübertragung zu bestimmen; und
Aufzeichnen der fortwährenden Zeit von der Startzeit zu der Stoppzeit der Signalübertragung, um die an den Anschluss durch den Lese-/Schreibgerätkörper verteilte Länge fortwährender Zeit für die Signalübertragung zu erfassen.

11. Verfahren nach Anspruch 9, **dadurch gekennzeichnet, dass** der Schritt zum Durchführen der Konfiguration der Zeitlänge für die Signalübertragung und ihres Ablaufs jeder der mit der Antennenumschalteinheit verbundenen Antennen gemäß der Länge fortwährender Zeit für die Signalübertragung, um das Konfigurationsergebnis für die Signalübertragung zu erfassen, Folgendes umfasst:
Einstellen einer Signalübertragungs-Konfigurationsstrategie für jede der mit der Antennenumschalteinheit verbundenen Antennen; und
Konfigurieren der Zeitlänge für die Signalübertragung und ihrer Abfolge jeder der Antennen in Übereinstimmung mit der Signalübertragungs-Konfigurationsstrategie und gemäß der Länge fortwährender Zeit für die Signalübertragung, um das Signalübertragungs-Konfigurationsergebnis zu erfassen.

12. Verfahren nach Anspruch 11, **dadurch gekennzeichnet, dass** die Signalübertragungs-Konfigurationsstrategie die folgende ist: die Länge fortwährender Zeit für die Signalübertragung wird gleich an jede der mit der Antennenumschalteinheit verbundenen Antennen verteilt oder die Länge fortwährender Zeit für die Signalübertragung wird in Übereinstimmung mit einem voreingestellten Gewichtungskoeffizienten an jede der mit der Antennenumschalteinheit verbundenen Antennen verteilt; und der Schritt zum Durchführen der Umschaltsteuerung an der Signalübertragung durch die mit der Antennenumschalteinheit verbundenen mindestens zwei Antennen gemäß dem Konfigurationsergebnis für die Signalübertragung ist der folgende: gemäß dem Signalübertragungs-Konfigurationsergebnis und während der Signalübertragungsperiode wird jede der Antennen gesteuert, um die Signalübertragung in Übereinstimmung mit der für die Antenne konfigurierten Zeitlänge für die Signalübertragung und ihres Ablaufs durchzuführen.

13. Verfahren nach Anspruch 11, **dadurch gekennzeichnet, dass** die Signalübertragungs-Konfigurationsstrategie die folgende ist:
die Länge fortwährender Zeit für die Signalübertragung wird abwechselnd an eine der mit der Antennenumschalteinheit verbundenen Antennen verteilt; und
der Schritt zum Durchführen der Umschaltsteuerung an der Signalübertragung durch die mit der Antennenumschalteinheit verbundenen mindestens zwei Antennen gemäß dem Konfigurationsergebnis für die Signalübertragung ist der folgende: gemäß dem Signalübertragungs-Konfigurationsergebnis und während jeder Signalübertragungsperiode wird eine Antenne separat gesteuert, um die Signalübertragung in Übereinstimmung mit einer Aufrufabfolge gemäß der Länge fortwährender Zeit für die Signalübertragung durchzuführen.

14. Verfahren nach Anspruch 13, **dadurch gekennzeichnet, dass** das Verfahren ferner das Folgende umfasst: der Lese-/Schreibgerätkörper sendet regelmäßig ein Rücksetzsignal an die Antennenumschalteinheit, die Antennenumschalteinheit empfängt das Rücksetzsignal und beginnt mit der anfänglichen Antenne in der Aufrufabfolge, in jeder Signalübertragungsperiode, den Schritt auszuführen, dass eine Antenne separat gesteuert wird, um die Signalübertragung in Übereinstimmung mit der Aufrufabfolge gemäß der Länge fortwährender Zeit für die Signalübertragung durchzuführen.

15. Verfahren nach einem der Ansprüche 9 bis 14, **dadurch gekennzeichnet, dass** das Verfahren ferner das Folgende umfasst:
der Lese-/Schreibgerätkörper bestimmt die mit dem aktivierten RFID-Etikett korrespondierende Antenne gemäß dem Signalübertragungs-Konfigurationsergebnis und bestimmt die Position des RFID-Etiketts gemäß dem Abdeckungsbereich der Antenne.

16. Verfahren nach Anspruch 15, **dadurch gekennzeichnet, dass** das Verfahren, bevor der Lese-/Schreibgerätkörper die mit dem aktivierten RFID-Etikett korrespondierende Antenne gemäß dem Signalübertragungs-Konfigurationsergebnis bestimmt, das Folgende umfasst:
der Lese-/Schreibgerätkörper bestimmt die Zeitlänge für die Signalübertragung und ihren Ablauf jeder der mit dem Anschluss korrespondierenden Antennen in Übereinstimmung mit der voreingestellten Konfigurationsstrategie gemäß der an jeden Anschluss durch den Lese-/Schreibgerätkörper verteilten Länge fortwährender Zeit für die Signalübertragung, um das Signalübertragungs-Konfigurationsergebnis jeder der Antennen zu erfassen.

## Revendications

1. Dispositif de lecture/écriture, d'identification radio fréquence RFID, comprenant :
un corps ( 100 ) de lecture/écriture et des antennes, et le corps ( 100 ) de lecture/écriture étant utilisé pour répartir, à chacun de ses propres accès, une longueur de temps continu pour émettre un signal ;
au moins une unité ( 300 ) de commutation d'antennes,
une extrémité de chacune des unités ( 300 ) de commutation d'antennes est reliée à un accès du corps ( 100 ) de lecture/écriture, et l'autre extrémité est reliée à au moins deux antennes ;
le dispositif de lecture/écriture RFID étant **caractérisé en ce que** l'unité ( 300 ) de commutation d'antennes est utilisée pour acquérir la longueur de temps continu pour l'émission du signal réparti à l'accès par le corps ( 100 ) de lecture/écriture, pour effectuer une configuration du temps-longueur pour l'émission du signal et sa séquence des au moins deux antennes suivant la longueur du temps continu pour l'émission du signal, pour obtenir un résultat de configuration pour l'émission du signal, et pour effectuer une commande de commutation sur l'émission du signal des au moins deux antennes suivant ce résultat de configuration de l'émission du signal.

2. Dispositif de lecture/écriture RFID suivant la revendication 1, **caractérisé en ce que** l'unité ( 300 ) de commutation d'antennes comprend :
un module ( 310 ) de commande du temps-longueur d'émission pour acquérir la longueur du temps continu pour l'émission du signal réparti à l'accès par le corps ( 100 ) de lecture/écriture ; pour configurer, suivant cette longueur de temps continu pour l'émission du signal, le temps-longueur pour l'émission du signal et sa séquence des au moins deux antennes conformément à une stratégie de configuration fixée à l'avance ; pour transmettre, suivant ce résultat de configuration, un signal de commande à un module ( 320 ) de commutation pendant l'émission du signal ;
un module ( 320 ) de commutation pour effectuer une opération de commutation sur l'émission du signal par les au moins deux antennes conformément au signal de commande provenant du module ( 310 ) de commande du temps-longueur d'émission.

3. Dispositif de lecture/écriture RFID suivant la revendication 2, **caractérisé en ce que** le module ( 310 ) de commande du temps-longueur d'émission comprend :
un module ( 311 ) d'acquisition du temps-longueur d'émission du signal pour acquérir la longueur du temps continu pour l'émission du signal réparti à l'accès par le corps ( 100 ) de lecture/écriture ;
un module ( 312 ) de configuration du temps-longueur d'émission d'antenne pour effectuer, suivant la longueur du temps continu pour l'émission du signal acquise par la module ( 311 ) d'émission, la configuration du temps-longueur pour l'émission du signal et sa séquence des au moins deux antennes conformément à la stratégie de configuration fixée à l'avance ; et
un module ( 313 ) de commande pour émettre un signal de commande vers le module ( 320 ) de commutation pendant l'émission du signal conformément au résultat de configuration d'émission du signal du module ( 312 ) de configuration du temps-longueur d'émission d'antenne.

4. Dispositif de lecture/écriture RFID suivant la revendication 3, **caractérisé en ce que** le module ( 311 ) d'acquisition du temps-longueur d'émission du signal comprend :
un module ( 501 ) de mesure du temps de marche/arrêt d'émission du signal pour mesurer le niveau de puissance du signal passant dans l'accès, pour comparer le résultat de la mesure à un seuil de niveau de puissance d'émission fixé à l'avance et pour déterminer l'instant de début et l'instant d'arrêt de l'émission du signal ; et
un module ( 502 ) de mesure du temps-longueur d'émission du signal pour enregistrer le temps continu allant de l'instant de début à l'instant d'arrêt de l'émission du signal, de manière à acquérir la longueur du temps continu pour l'émission du signal réparti à l'accès par le corps ( 100 ) de lecture/écriture.

5. Dispositif de lecture/écriture RFID suivant la revendication 3, **caractérisé en ce que** le module ( 312 ) de configuration du temps-longueur d'émission d'antenne comprend :
un module ( 601 ) de fixation d'une stratégie de configuration pour fixer la stratégie de configuration d'émission du signal des au moins deux antennes ;
un module ( 602 ) de répartition du temps-longueur d'émission pour configurer le temps-longueur pour l'émission du signal et sa séquence des au moins deux antennes, conformément à la stratégie de configuration d'émission du signal fixée dans le module ( 601 ) de fixation de la stratégie de configuration, conformément à la longueur du temps continu pour l'émission du signal acquise par le module ( 311 ) d'acquisition du temps-longueur d'émission du signal.

6. Dispositif de lecture/écriture RFID suivant la revendication 2, **caractérisé en ce que** le module ( 320 ) de commutation comprend :
un premier module ( 321 ) de commutation d'émission/réception, un deuxième module ( 322 ) de commutation d'émission/réception, un module (323) de commutation d'antennes et un coupleur ( 324 ), dans lequel le premier module ( 321 ) de commutation d'émission/réception comprend une interface d'émission/réception, une première interface d'émission et une première interface de réception ; la première interface d'émission/réception est reliée à un accès du corps ( 100 ) de lecture/écriture et un canal d'émission est formé entre la première interface d'émission/réception et la première interface d'émission et un canal de réception est formé entre la première interface d'émission/réception et la première interface de réception ; et chaque premier module ( 321 ) de commutation d'émission/réception est utilisé pour commuter le canal d'émission et le canal de réception, conformément au signal de commande provenant du module ( 310 ) de commande du temps-longueur d'émission ;
le nombre des deuxièmes modules ( 322 ) de commutation d'émission/réception étant le même que le nombre d'antennes,
et chaque deuxième module ( 322 ) de commutation d'émission/réception comprend : une deuxième interface d'émission/réception, une deuxième interface d'émission et une deuxième interface de réception ; la deuxième interface d'émission/réception est reliée aux antennes et un canal d'émission est formé entre la deuxième interface d'émission/réception et la deuxième interface d'émission et un canal de réception est formé entre la deuxième interface d'émission/réception et la deuxième interface de réception ;
et chaque deuxième module ( 322 ) de commutation d'émission/réception est utilisé pour commuter le canal d'émission et le canal de réception, conformément au signal de commande provenant du module ( 310 ) de commande du temps-longueur d'émission ;
le module ( 323 ) de commutation d'antennes comprend :
une interface de réception du signal et des interfaces d'émission du signal en le même nombre que le nombre d'antennes ; l'interface de réception du signal est relié à la première interface d'émission du premier module ( 321 ) de commutation d'émission/réception et chacune des interfaces d'émission est reliée à la deuxième interface de réception de l'un des deuxièmes modules ( 322 ) de commutation d'émission/réception ; et le module ( 323 ) de commutation d'antennes est utilisé pour commuter les canaux entre l'interface de réception du signal et chacune des interfaces d'émission, conformément au signal de commande provenant du module ( 310 ) de commande du temps-longueur d'émission ; et
le coupleur ( 324 ) comprend : une interface d'émission du signal et une interface de réception du signal en le même nombre que le nombre d'antennes ; l'interface d'émission du signal est reliée à la première interface de réception du premier module ( 321 ) de commutation d'émission/réception et chacune des interfaces de réception est reliée à la deuxième interface d'émission de l'un des deuxièmes modules ( 322 ) de commutation d'émission/réception ; et le coupleur ( 324 ) est utilisé pour coupler le signal provenant de chaque module ( 322 ) de commutation d'émission/réception, de manière à obtenir en sortie un signal allant d'un canal au premier module ( 321 ) de commutation d'émission/réception.

7. Dispositif de lecture/écriture RFID suivant l'une quelconque des revendications 2 à 6, **caractérisé en ce que** le corps ( 100 ) de lecture/écriture détermine en outre l'antenne correspondant à une étiquette RFID activée, conformément au résultat de configuration pour l'émission du signal, et détermine la position de l'étiquette RFID conformément à la zone de couverture de l'antenne.

8. Dispositif de lecture/écriture RFID suivant la revendication 7, **caractérisé en ce que** le corps ( 100 ) de lecture/écriture comprend :
un module ( 110 ) de détermination du temps-longueur d'émission d'antenne pour déterminer le temps-longueur pour l'émission du signal et sa séquence des au moins deux antennes correspondant à chaque accès, conformément à la stratégie de configuration fixée à l'avance suivant la longueur du temps continu pour l'émission du signal réparti à chaque accès par le corps ( 100 ) de lecture/écriture, de manière à acquérir le résultat de configuration pour une émission du signal des au moins deux antennes ; et
un module ( 120 ) de détermination de la position de l'étiquette RFID pour déterminer l'antenne correspondant à l'étiquette RFID activée, conformément au résultat de configuration pour l'émission du signal, et pour déterminer la position de l'étiquette RFID conformément à la zone de couverture de l'antenne.

9. Procédé de mise en oeuvre pour une commutation d'antennes d'un dispositif de lecture/écriture RFID d'identification radio fréquence, dans lequel au moins une unité de commutation d'antennes est disposée entre un corps de lecture/écriture et les antennes, une extrémité de chacune des unités de commutation d'antennes étant reliée à un accès du corps d'écriture/lecture et l'autre extrémité étant reliée à au moins deux antennes ;
le procédé étant **caractérisé en ce qu'**il comprend les stades suivants :
on acquiert par chacune des unités de commutation d'antennes, la longueur du temps continu pour l'émission du signal réparti à l'accès relié à l'unité de commutation d'antennes par le corps de lecture/écriture ;
on effectue une configuration du temps-longueur pour l'émission du signal et sa séquence de chacune des antennes reliées à l'unité de commutation d'antennes, conformément à la longueur de temps continu pour l'émission du signal, de manière à acquérir le résultat de configuration pour l'émission du signal ; et
on effectue une commande de commutation sur l'émission du signal par chacune des antennes reliées à l'unité de commutation d'antennes, conformément au résultat de configuration pour l'émission du signal.

10. Procédé suivant la revendication 9, **caractérisé en ce que** le stade d'acquisition par l'unité de commutation d'antennes de la longueur du temps continu pour l'émission du signal réparti à l'accès relié à l'unité de commutation d'antennes par le corps de lecture/écriture comprend :
mesurer, par l'unité de commutation d'antennes, le niveau de puissance du signal passant dans l'accès, comparer le résultat de la mesure obtenue à un seuil de niveau de puissance d'émission fixé à l'avance, de manière à déterminer l'instant de début et l'instant d'arrêt de l'émission du signal ; et
enregistrer le temps continu allant de l'instant de début à l'instant d'arrêt de l'émission du signal, de manière à acquérir la longueur du temps continu pour l'émission du signal réparti à l'accès par le corps de lecture/écriture.

11. Procédé suivant la revendication 9, **caractérisé en ce que** le stade dans lequel on effectue la configuration du temps-longueur pour l'émission du signal et sa séquence de chacune des antennes reliées à l'unité de commutation d'antennes, conformément à la longueur du temps continu pour l'émission du signal, de manière à acquérir le résultat de configuration pour l'émission du signal comprend :
fixer une stratégie de configuration de transmission du signal pour chacune des antennes reliées à l'unité de commutation d'antennes ; et configurer le temps-longueur pour l'émission du signal et sa séquence de chaque antenne, conformément à la stratégie de configuration d'émission du signal et
conformément à la longueur du temps continu pour l'émission du signal, de manière à acquérir le résultat de configuration d'émission du signal.

12. Procédé suivant la revendication 11, **caractérisé en ce que** la stratégie de configuration d'émission du signal est la suivante : la longueur du temps continu pour l'émission du signal est répartie entre chacune des antennes reliées à l'unité de commutation d'antennes ou la longueur du temps continu pour l'émission du signal est répartie entre chacune des antennes reliées à l'unité de commutation d'antennes, conformément à un coefficient de pondération fixé à l'avance ; et le stade dans lequel on effectue la commande de commutation sur l'émission du signal par les au moins deux antennes reliées à l'unité de commutation d'antennes, conformément au résultat de configuration pour l'émission du signal, est le suivant : suivant le résultat de configuration d'émission du signal, et pendant la durée d'émission du signal, chacune des antennes est commandée pour effectuer l'émission du signal conformément au temps-longueur pour l'émission du signal et sa séquence configurée pour cette antenne.

13. Procédé suivant la revendication 11, **caractérisé en ce que** la stratégie de configuration d'émission du signal est la suivante :
la longueur de temps continu pour l'émission du signal est répartie à son tour sur l'une des antennes reliées à l'unité de commutation d'antennes ; et
le stade dans lequel on effectue la commande de commutation sur l'émission du signal par les au moins deux antennes reliées à l'unité de commutation d'antennes, conformément au résultat de configuration pour l'émission du signal, est le suivant : suivant le résultat de configuration de l'émission du signal, et pendant chaque durée d'émission du signal, une antenne est commandée séparément pour effectuer l'émission du signal, conformément à une séquence d'appel en fonction de la longueur du temps continu pour l'émission du signal.

14. Procédé suivant la revendication 13, **caractérisé en ce que** le procédé comprend en outre ce qui suit: le corps de lecture/écriture envoie périodiquement un signal de remise à l'état initial à l'unité de commutation d'antennes, l'unité de commutation d'antennes reçoit le signal de remise à l'état initial et commence par l'antenne initiale dans la séquence d'appel à exécuter dans chaque durée d'émission du signal le stade dans lequel une antenne est commandée séparément pour effectuer l'émission du signal, conformément à la séquence d'appel suivant la longueur du temps continu pour l'émission du signal.

15. Procédé suivant l'une quelconque des revendications 9 à 14, **caractérisé en ce que** le procédé comprend en outre ce qui suit :
le corps de lecture/écriture détermine l'antenne correspondant à l'étiquette RFID activée, conformément au résultat de configuration d'émission du signal, et détermine la position de l'étiquette RFID suivant la zone de couverture de l'antenne.

16. Procédé suivant la revendication 15, **caractérisé en ce que**, avant que le corps de lecture/écriture détermine l'antenne correspondant à l'étiquette RFID activée, conformément au résultat de configuration d'émission du signal, le procédé comprend en outre ce qui suit :
le corps de lecture/écriture détermine le temps-longueur pour l'émission du signal et sa séquence de chacune des antennes correspondant à l'accès, conformément à la stratégie de configuration fixée à l'avance suivant la longueur du temps continu pour l'émission du signal répartie à chaque accès par le corps de lecture/écriture, de manière à acquérir le résultat de configuration d'émission du signal de chacune des antennes.
